# EUROPEAN PATENT APPLICATION

(11) **EP 1 048 556 A1**
(43) Date of publication of application: **02.11.2000**
(21) Application number: 00108437.5
(22) Date of filing: 18.04.2000
(51) Int. Cl.: B62D 35/00

(54) **A device for reducing the aerodynamic resistance of a motor vehicle**

(30) Priority: 26.04.1999 IT TO990335
(71) Applicant: FIAT AUTO S.p.A., 10135 Torino (IT)
(72) Inventor: Stellato, Marco, 10146 Torino (IT)
(74) Representative: Cian, Paolo

(57) **Abstract**

A device for reducing the aerodynamic resistance of a motor vehicle, which comprises means (15) for deflecting an external air stream (B) which flows over the outer surface of the body (1, 1a) of the motor vehicle during forward movement thereof, arranged near an edge (5) of a rear end wall (4) of the motor vehicle and including at least one source (15) of an auxiliary air stream (A) directed substantially transversely of the external air stream (B) so as to interfere therewith.

## Description

The present invention relates to a device for reducing the aerodynamic resistance of a motor vehicle, which includes means for deflecting an external air stream which flows over an external surface of the body of the motor vehicle during its forward movement, arranged near an edge of a rear end panel of the motor vehicle.

Known devices of the type described above are commonly used on the rear portion or tail of the body of a motor vehicle to alter the flow of air in the wake caused by the movement of the vehicle, in order to reduce the aerodynamic resistance thereof during its forward movement.

The air stream in the wake of a moving motor vehicle can be considered as the resultant of a predominantly two-dimensional stream composed of a pair of counter-rotating vortices formed behind the tail of the motor vehicle and of a predominantly three-dimensional stream, essentially constituted by two high-intensity symmetrical, counter-rotating longitudinal vortices set up by the air flowing past the rear pillars of the motor vehicle body and which thus depends on the inclination of the said pillars, since the said longitudinal vortices are comparable to a pair of vortices at the tip of a short wing.

In particular, the drag of a moving motor vehicle depends, to a first approximation, on phenomena involved in the separation of the said two-dimensional and three-dimensional air streams which generate pressure resistance. As a result, a reduction in the phenomena caused by separation of the two-dimensional and three-dimensional components of the wake at the tail of a moving motor vehicle translates into a reduction in the drag of the motor vehicle.

In order to achieve such a reduction, it is necessary to act on the shape of the rear portion of the motor vehicle, that is on the angle of inclination and the length of the said portion, and in particular on the radius of curvature at the edges joining the body panels, and on the geometry of the base of the body.

In order to achieve a macroscopic effect on the vortex drag of a motor vehicle, appendages in the shape of auxiliary wings or sharp corners, commonly known as "aerodynamic spoilers", are often used, normally arranged at the upper edge of the rear panel of a motor vehicle.

The spoiler makes it possible to alter the separation of the air streams described above, by varying resistance to pressure so as to determine a significant reduction in the drag coefficient of the motor vehicle, and thus of its overall drag.

However, use of spoilers on the body of a motor vehicle can be unwelcome, since it restricts design options and can interfere with the line of the rear portion of the motor vehicle.

In order to solve this problem, the object of the present invention is to provide a device of the aforementioned type, characterised in that the means for deflecting the external airflow include at least one source of an auxiliary airflow directed substantially transverse the external airflow so as to interfere therewith.

Thanks to the invention, it is possible to provide a device for reducing the aerodynamic resistance of a motor vehicle which does not require the presence of supplementary aerodynamic appendages at the upper edge of the tail end of the motor vehicle, and which is able to achieve a similar reduction in drag to that achieved by aerodynamic appendage devices known in the prior art.

Further characteristics and advantages of the present invention will become apparent from the detailed description which follows, provided with reference to the appended drawings, supplied purely by way of non-limitative example, in which:
Figure 1 is a partially sectioned side elevation view of the rear portion of a first motor vehicle,
Figure 2 is an enlarged schematic view of a detail indicated by the arrow II in Figure 1,
Figure 3 is a similar view to Figure 1 of a different motor vehicle, and
Figure 4 is a schematic perspective view which offers in a fragmented manner illustrations of the main components of a device according to the invention.

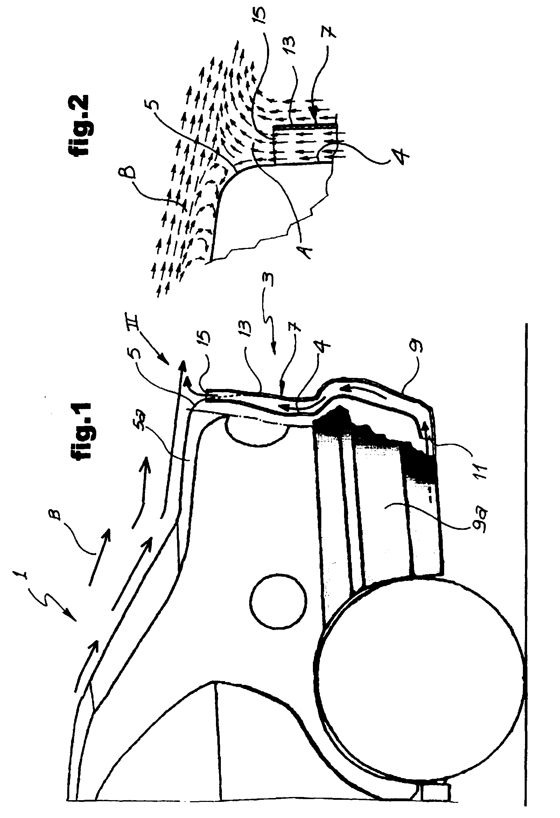

With reference first to Figures 1, 2 and 4, the rear portion or tail of a motor vehicle body 1, having a so-called three-box or "notch-back" body, is indicated 3. In particular, the rear wall 4 is joined to the upper surface of a lid 5a of a boot by an upper edge 5 with a relatively wide radius of curvature.

A flattened duct 7 is associated with the wall 4, extending the length thereof, transverse the longitudinal direction of the motor vehicle 1 and closed along its lateral edges. The duct 7 opens just beneath the edge 5 and acts as the source of an auxiliary air stream A directed transverse the external air stream B which flows over the body 1, so as to interfere therewith and thereby alter the air stream in its wake.

In particular, the air stream A is supplied to the duct 7 during forward motion of the car 1 through a lower front aperture 11 formed so as to constitute a dynamic air intake opening under the body 1 of the motor vehicle. The air stream A exits from the duct 7 through an upper outlet 15, opposite the air intake 11, oriented so as to direct the air stream A upwards in order to blow air towards the edge 5 and thereby interfere with the air stream B.

The duct 7 is preferably made in two communicating parts: a lower portion 9 formed on the inner surface of the bumper 9a by means of partitions, possibly made of a softer material than that of the bumper itself, and an upper portion 13, partly formed by a channel formed by the inner covering of the back wall 4 of the lid 5a, in such a way that only a small portion of the duct 7, substantially at the site of the opening 15, protrudes from the back wall 4.

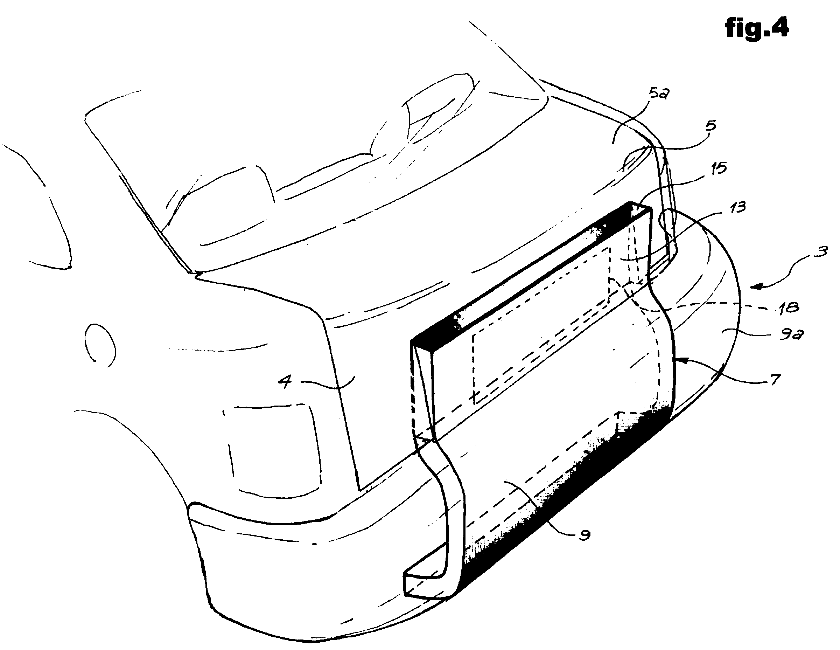

The upper portion 13 of the duct 7 can be delimited at the back, near the opening 15, by a number-plate bracket 18 (See Figure 4) for the motor vehicle 1, in such a way that the presence of the device of the invention has only the smallest effect on the aesthetics of the tail of the motor vehicle 1.

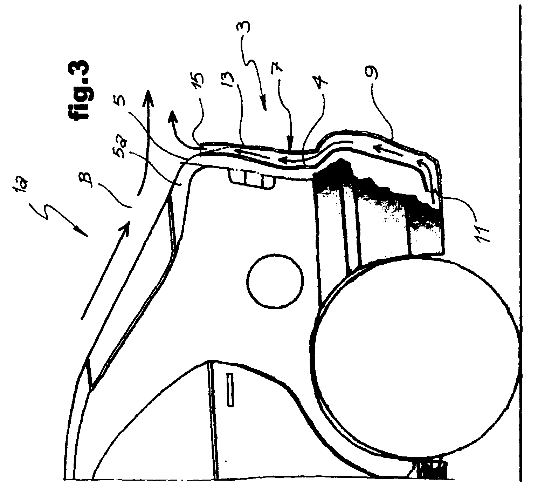

In Figure 3, in which the same reference numbers have been used to indicate parts which are the same as, or similar to those of Figure 1, the invention is applied to a motor vehicle 1a with a two-and-a-half box body, a so-called fast-back, that is having a sharply inclined surface between the rear edge of the roof and the upper edge 5 of the rear wall 4.

Then applied either to three-box, or notch-back bodies or to two-and-a-half box or fast-back bodies, that is bodies with relatively high tails, the device of the invention proved able, in trials conducted by the Applicant, to achieve the same reduction in aerodynamic resistance as that obtainable with a conventional aerodynamic spoiler. In particular, the achieved drag reduction remained substantially constant over a range of speed of the car of around 80 to 140 km/h.

The outlet aperture of a device according to the invention used in the trials was around 2 cm long and around 70 cm wide, measured with respect to the longitudinal axis of the motor vehicle, and the performance compared with that achieved with a spoiler having a wing having an arcuate plan form, around 100 cm wide and at most 15 cm long at its central portion, arranged at the edge 5.

The trials also revealed that when using both a conventional wing spoiler and a device of the invention at the site of the upper edge 5 of the rear wall 4 of a motor vehicle, their capacity to reduce aerodynamic resistance partly combine to give a total reduction in drag greater than that achieved with either the wing spoiler or the device of the invention alone.

## Claims

1. A device for reducing the aerodynamic resistance of a motor vehicle, comprising means (15) for deflecting an external air stream (B) which flows over the external surface of the body (1, 1a) of the motor vehicle during its forward movement, disposed close to an edge (5) of a rear end wall (4) of the motor vehicle,
characterised in that the means for deflecting the external air stream (B) comprise at least one source (15) of an auxiliary air stream (A) directed substantially transverse the external air stream (B) so as to interfere therewith.

2. A device according to Claim 1, characterised in that the source (15) of the auxiliary air stream (A) is located near the upper edge (5) of the said rear end wall (4) of the motor vehicle, thereby directing the auxiliary air stream (A) upwardly.

3. A device according to Claim 2, characterised in that the source of the auxiliary air stream (A) has an elongate outlet opening (15) which extends transversely of the motor vehicle (1, 1a) along the rear end wall (4) thereof, just beneath its upper edge (5).

4. A device according to any one of Claims 1 to 3, characterised in that it includes a generally flattened duct (7) having a first end with at least one dynamic air intake (11), facing forwardly relative to the forward direction of the motor vehicle, and a second end provided with the said outlet opening (15).

5. A device according to Claim 4, characterised in that the said at least one dynamic air intake (11) opens in correspondence with the bottom of the body.

6. A device according to Claim 5, characterised in that the duct (7) includes a first portion (9) arranged along an inner surface of the rear bumper (9a) of the car (1, 1a) and connected to a second portion (13) arranged along a rear wall (4) of a rear boot lid (5a) of the motor vehicle.

7. A device according to Claim 6, characterised in that the second portion (13) of the duct is delimited by a number plate holder (18) of the motor vehicle.
